# EUROPEAN PATENT SPECIFICATION

(11) **EP 3 157 348 B1**
(45) Date of publication and mention of the grant of the patent: **12.06.2019**
(21) Application number: 15719979.5
(22) Date of filing: 14.04.2015
(51) Int. Cl.: A23D 7/00, A23D 7/02, A23D 7/005, A23D 7/01, A23D 7/04, A23D 7/05

(54) **PROCESS FOR THE MANUFACTURE OF EDIBLE WATER-IN-OIL EMULSION**
VERFAHREN ZUR HERSTELLUNG VON ESSBAREN WASSER-IN-ÖL-EMULSIONEN
PROCÉDÉ DE FABRICATION D'UNE ÉMULSION EAU DANS L'HUILE COMESTIBLE

(30) Priority: 20.05.2014 EP 14169109
(43) Date of publication of application: 26.04.2017
(60) Divisional application: 19171056.5
(73) Proprietor: Unilever NV, 3013 AL Rotterdam (NL); Unilever PLC, London, Greater London EC4Y 0DY (GB); Upfield Europe B.V., 3071 JL Rotterdam (NL); Unilever BCS Limited, London, EC4Y 0DY (GB)
(72) Inventor: MAN, Teunis de, 3133 AT Vlaardingen (NL); MEEUSE, Frederik Michiel, 3133 AT Vlaardingen (NL)
(74) Representative: EP&C
(86) International application number: PCT/EP2015/058010
(87) International publication number: WO 2015/176872

(56) References cited:
- EP-A1- 1 688 044
- WO-A1-2013/056964
- Anonymous: "Dynamic Mixer", SPX Flow Technology - Gerstenberg Schröder (GS) , 30 November 2013 (2013-11-30), XP002732120, Retrieved from the Internet: URL:http://web.archive.org/web/20131130043 630/http://www.spx.com/en/gerstenberg-schr oder/pd-mp-dynamic-mixer/ [retrieved on 2014-11-06]

## Description

### Field of the invention

The present invention is directed to a process for the manufacture of non-pourable edible water-in-oil emulsions. In addition the invention is directed to the emulsions obtainable by said process. These products are characterized by having improved properties, such as stability and firmness. Furthermore the invention is directed to the use of such emulsions for baking to provide baked goods with improved texture.

### Background of the invention

Edible water-in-oil emulsions, which comprise a continuous fat phase and a dispersed aqueous phase, are well known in the art and include for example margarine.

The fat phase of margarine and similar water-in-oil emulsions is typically a mixture of liquid oil (i.e. fat that is liquid at ambient temperature) and fat which is solid at ambient temperatures. The solid fat, also called structuring fat or hardstock fat, serves to structure the fat phase and helps to stabilize the aqueous phase (e.g. in the form of droplets) by forming a fat crystal network. Ideally the structuring fat has such properties that it melts or dissolves at mouth temperature otherwise the product may have a heavy and/or waxy mouthfeel.

Margarine is generally defined as a composition containing at least 80 wt. % fat and about 20 wt. % aqueous phase. In contrast, emulsions containing less than 80 wt. % fat are generally called spreads. Nowadays the terms margarine and spread are sometimes used interchangeably although in some countries the commercial use of the term margarine is subject to certain regulatory requirements. For the purpose of the present invention the terms margarine and spread will be used interchangeably.

In the market place margarine is generally sold as one of three principal types of water-in-oil emulsion:
- hard or stick margarine (also referred to as wrappers);
- (typically softer) tub margarine; and
- liquid or pourable margarine.

Wrapper margarines and tub margarines are non-pourable and generally contain a higher amount of hardstock fat than liquid or pourable margarines.

The general process for the manufacture of water-in-oil emulsions, using the votator or churn process, encompasses the following steps:
1. Mixing of the liquid oil, the hardstock fat and if present the water-phase at a temperature at which the hardstock fat is definitely liquid;
2. cooling of the mixture under high shear to induce crystallization of the hardstock fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

High-fat (e.g. above 50 % fat) non-pourable water-in-oil emulsions (e.g. wrapper and tub margarines) are commonly used in the preparation of foods, such as for baking, frying and cooking (e.g. to make gravy). For example, the use of such high-fat emulsions in baking general improves the aeration of the dough (or batter) and improves the moist feel of the final backed product. Furthermore, the hardstock fat (crystals) provide additional structure and stability to the dough and backed product.

A common problem in the use of such high-fat non-pourable emulsions in baking is that the texture of the baked products can be suboptimal. In particular, when used in amounts as generally specified by recipes (e.g. to make cake), the baked product often has a texture which is less soft than is desirable.

US5,178,897 relates to water-in-oil emulsion composition for bakery capable of giving a product soft texture and good meltability in the mouth. This is achieved by a water-in-oil emulsion comprising from 0.1 to 2.0 wt. % of trans-unsaturated monoglyceride; and further comprising a sizing agent.

High-fat non-pourable emulsions need to have a certain firmness (also called hardness), and a good stability (e.g. small and stable water-droplet size). For example, wrapper margarines should also be able to withstand a certain amount of pressure to enable stacking at the manufacturing site, during transport, storage or presentation in the shop. For example, high-fat tub margarinesoften have an irregular upper surface as the product tends to congeal very rapidly when it is filled into the tub. Consumers nowadays have come to expect such surface undulations upon opening of the tub as an indication of freshness. Therefore, also tub margarines need to have a certain firmness to retain (surface) shape during storage and transport.

Thus it is desirable that high-fat non-pourable emulsions, such as tub margarines and wrappers, are sufficiently firm at storage conditions, in particular at refrigeration conditions. On the other hand during use at ambient temperatures it is desirable that the high fat non-pourable emulsions are sufficiently soft to enable easy processing. For example, when used for baking an essential step is the kneading of dough to mix ingredients. For easy dough kneading, especially if done by hand, it is important that the high-fat emulsion sufficiently softens at ambient temperatures. Thus preferably such emulsions soften considerably after being take from the fridge and are warmed to ambient temperatures.

Stability is another important attribute of good quality high-fat non-pourable emulsions. For example, oil and/or water-phase separation during storage or use should be avoided. An indication of stability is that the average water-droplet size is small, that the variance in droplet size is small; and that these remain so during storage. A small and stable droplet size is also important to maintain microbiological stability.

Nowadays health conscious consumers desire high-fat non-pourable emulsions to have reduced amounts of saturated fatty acids (SAFAs). SAFAs typically contribute to the overall solids content and stability. Reducing the amount of SAFA of in emulsion typically adversely impacts firmness and stability. Thus there is a need for high-fat emulsions which are sufficiently firm (at storage conditions) and/or stable, while having a reduced amount of SAFA.

GB1327511 discloses a process for the preparation of low-calorie spreads by mixing a first liquid which consists of a fat phase containing crystallisable material at a temperature of at least 28 degrees Celsius, with a second liquid substantially free from crystallisable material at a temperature of at most 8 degrees Celsius. It was found that the stability and hardness (at low and ambient temperatures) of the high fat emulsions made according to GB1327511 leaves to be desired.

EP 1688044 discloses a process to make a butter-like dairy spread, wherein an edible vegetable fat is mixed at a temperature below 22°C with at least butter and a taste ingredient.

Alternatives to the votator or churn process for the manufacture of margarines are known which involve the use of fat powder comprising hardstock fat (i.e. pre-crystallized fat) (WO 2005/014158). However, it was observed that use of fat powder (containing pre-crystallized hardstock) may give rise to problems when used for the manufacture of high-fat non-pourable emulsions. Such products typically require a relatively high amount of hardstock fat. In particular it was found that the liquid oil slurry, when comprising a relatively large amount of hardstock fat in the form of fat powder, can become very viscous and difficult to handle (e.g. mix and/or pump). Furthermore the use of micronized fat powder comprising hardstock fat may have other disadvantageous as well. For example when used on factory scale the fat powder can lead to problems such as dustiness and the (large) space requirement for the machinery. In particular, large scale hoppers and micronisation equipment which are used to make fat powder can generally take up a large amount of space in the factory. In fact it is desired to provide a process for the manufacture of high-fat non-pourable water-in-oil emulsion which is simple, and preferably requires less (factory) equipment.

It is therefore an object of the present invention to provide high-fat non-pourable water-in-oil emulsion (e.g. tub margarine, wrapper margarine) which has:
- an improved firmness, and/or
- has an improved stability, and/or
- can be used in baking to provide improved organoleptic properties to the baked product, and/or
when compared to emulsions made with prior art processes;
- while preferably comprising a low amount of SAFAs and/or solids; and/or
- while preferably made using a reduced amount of micronized fat powder.

In particular, it is an object of the present invention to provide high-fat non-pourable water-in-oil emulsion which has:
- an increased firmness at low temperatures while having a reduced firmness at ambient temperatures, and/or
- good softening from refrigeration to ambient temperature, and/or
- has a reduced average water-droplet size (or size distribution), and/or
- can be used in baking to provide improved softness to the baked product;
when compared to emulsions made with prior art processes;
- while preferably comprising a low amount of SAFAs and/or solids; and/or
- while preferably made using little or no micronized fat powder.

### Summary of the invention

It was found that one or more of these objectives are achieved by a process for the manufacture of a non-pourable edible water-in-oil emulsion comprising at least 50 wt. % of total fat, comprising the following steps:
a. providing 5 to 90 wt. % of hardstock fat, based on the weight of total fat, in liquid form;
b. providing a liquid mixture of water and oil, wherein the mixture has a temperature below the melting point of the hardstock fat;
c. mixing the hardstock fat in liquid form with the liquid mixture of water and oil;
wherein the temperature of the mixture provided at step 'c' (i.e. comprising hardstock fat, water and oil) is below the melting point of the hardstock fat, and wherein the amount of trans unsaturated fatty acid is less than 5 wt. %, based on the weight of total fat, wherein both the hardstock fat as well as the liquid oil consists essentially of vegetable fat and oil..

For example, wrapper products made by the process according to the invention show improved stability and firmness compared to wrappers having the same composition but not made with the process according to the invention. Furthermore, it was observed that when making non-pourable emulsions according to the invention less equipment is required. For example, generally a votator process to manufacture wrappers involves one or more A-units, C-units and B-units. The C and B-unit are necessary to further treat the mixed emulsion before packing (e.g. to allow further working and hardening before packing). It was found that the in the process according to the invention the use of B-units and/or C-units could be omitted before wrapping, while still resulting in good quality products.

Without being bound by theory it is believed that low levels of *trans* fatty acids (trans FAs) used in the present process, and the mixing of the relatively hot hardstock fat with a relatively cold liquid mixture of water and oil (e.g. versus mixing with only oil or water) allows more rapid crystallization. The rapid crystallization of the hardstock fat, at the moment water-droplets are dispersed in the oil phase, is believed to be important in providing the improved high-fat emulsions according to the invention. However, the exact underlying structural differences of the emulsion made according to the invention and not made according to the invention are not known in detail.

Surprisingly, it was further observed that when a high-fat non-pourable emulsion according to the invention is used for baking, the resulting baked products, such as cakes, show improved organoleptic properties. In particular, they have a softer texture compared to cakes made using e.g. prior art (votator) wrapper products.

Thus the invention relates in a third aspect to the use of the non-pourable emulsion according to the invention in baking to improve the organoleptic properties of bakery products.

### Detailed description

Weight percentage (wt. %) is based on the total weight of the product unless otherwise stated. It will be appreciated that the total weight amount of ingredients will not exceed 100 wt. % based on total weight of the product.

The terms 'fat' and 'oil' are used interchangeably. Where applicable the prefix 'liquid' or 'solid' is added to indicate if the fat or oil is liquid or solid at ambient temperature as understood by the person skilled in the art. Ambient temperature is considered to be a temperature of about 20 degrees Celsius. Hardstock fat refers to a fat that is solid at ambient temperature as understood by the person skilled in the art. The terms 'hardstock fat', 'structuring fat' or 'hardstock' are used interchangeably.

The terms 'liquid hardstock fat' and 'hardstock fat in liquid form' are used interchangeably. The terms 'water' and 'water-phase' are used interchangeably.

Non-pourable water-in-oil emulsions according to the invention encompass solid or semi-solid emulsions such as wrapper- and tub margarines. Preferably the non-pourable water-in-oil emulsions according to the invention are tub or wrapper margarines, and more preferably are wrapper margarines. The non-pourable emulsions according to the invention are non-pourable at refrigeration conditions (e.g. 4 degrees Celsius) and preferably also at ambient conditions. Preferably the non-pourable edible emulsion according to the invention has a Stevens value (measured at 5 degrees Celsius, after storage at 5 degrees Celsius for 1 week) of from 300 to 2000, more preferably from 400 to 1500, even more preferably from 550 to 1200 and still even more preferably from 600 to 900. This Stevens value is preferably measured using a Stevens penetrometer (Brookfield LFRA Texture Analyser (LFRA 1500), ex Brookfield Engineering Labs, UK) equipped with a stainless steel probe with a diameter of 4.4 mm and operated in "normal" mode. The probe is pushed into the product at a speed of 2 mm/s, a trigger force of 5 gram from a distance of 10 mm. The force required is read from the digital display and is expressed in grams.

Fat as used in the present invention refers to edible triglyceride based fat as understood by the person skilled in the art. The terms 'triacylglycerols', 'TAGs', and 'triglycerides' are used interchangeably; they refer to esters of glycerol and three fatty acids. The fatty acid (moieties) of the TAGs may vary in length. The length of a fatty acid is commonly indicated by their carbon number. The fatty acid (moieties) may be saturated, monounsaturated or polyunsaturated.

### Process to manufacture non-pourable edible water-in-oil emulsion

In a first aspect the invention relates to a process for the manufacture of a non-pourable edible water-in-oil emulsion comprising at least 50 wt. % of total fat, comprising the following steps:
a. providing 5 to 90 wt. % of hardstock fat, based on the weight of total fat, in liquid form;
b. providing a liquid mixture of water and oil, wherein the mixture has a temperature below the melting point of the hardstock fat;
c. mixing the hardstock fat in liquid form with the liquid mixture of water and oil;
wherein the temperature of the mixture provided at step 'c' (i.e. comprising harstock fat, water and oil) is below the melting point of the hardstock fat, and wherein the amount of trans unsaturated fatty acid is less than 5 wt. %, based on the weight of total fat.

### step 'a' - providing the hardstock fat in liquid form

The process according to the invention comprises the step 'a' of providing hardstock fat in liquid form. This is to be understood as providing hardstock fat in liquid form. The hardstock fat provided at step 'a' should be in liquid form upon contact (i.e. just before) with the liquid mixture of water and oil at step 'c'. After contact at step 'c' the hardstock fat is allowed to (fully) crystallize. Preferably the hardstock fat is provided in liquid form at step 'a' by sufficiently heating the hardstock fat (e.g. above its melting point). The melting point of hardstock fat is in large part determined by its triglyceride composition. The melting point of common hardstock fats is known by the skilled person or can be determined by a simple testing (e.g. by controlled heating of a hardstock fat sample. Preferably the temperature of the hardstock fat in liquid form provided at step 'a' is at least 25 degrees Celsius, more preferably from 27 to 80 degrees Celsius, even more preferably from 30 to 70 degrees Celsius, still even more preferably from 35 to 60 degrees Celsius and still even more preferably from 38 to 50 degrees Celsius.

It was observed that conditions which favor fast crystallization of the hardstock fat upon mixing with the emulsion at step 'c' of the process of the invention, further improve the quality of the emulsions made. This was observed to lead to emulsions with improved firmness, stability and organoleptic properties of the baked products. Fast cooling of the hardstock fat can be achieved by providing liquid hardstock fat at step 'a' with a temperature which is close to its melting point (i.e. not raised too far above its melting point).

Preferably the liquid hardstock fat provided at step 'a' has a temperature which is at least above the melting point of the hardstock fat, but preferably not more than at most 15 degrees Celsius, more preferably at most 10 degrees Celsius, even more preferably at most 8 degrees Celsius and still even more preferably at most 5 degrees Celsius above the melting point of the hardstock fat.

### step 'b' - providing the liquid mixture of water and oil

Providing the liquid mixture of water and oil provided at step 'b', is to be understood as providing a mixture of liquid oil and liquid water upon contact with the hardstock fat in liquid form at step 'c'. For example, a process wherein the liquid oil, liquid water and hardstock fat in liquid form enter a mixing device as three separate streams, and meet for the first time within the (running) mixing chamber is encompassed by the present invention. However, preferably the liquid mixture of water and oil is provided at step 'b' in the form of a pre-mix and more preferably as a liquid water-in-oil emulsion before contact with the hardstock fat in liquid form. A water-in-oil emulsion comprising a dispersed water-phase and a continuous oil phase can be provided from a water-phase and liquid oil using techniques known in the art. These techniques typically involve suitable agitation and commonly the use of water-in-oil promoting additives, such as certain emulsifiers.

Typically fat soluble emulsifiers are used in the manufacture of water-in-oil emulsions. The Hydrophilic-Lipophilic Balance (HLB) of an emulsifier is a measure of the degree to which it is hydrophilic or lipophilic. The HLB value is a parameter which is describing the solubility of the surfactant. The HLB value is a concept introduced by Griffin in 1950 as a measure of the hydrophilicity or lipophilicity of nonionic surfactants. It can be determined experimentally by the phenol titration method of Marszall; see "Parfumerie, Kosmetik", Vol. 60, 1979, pp. 444-448; and Rompp, Chemistry Lexicon, 8th Edition 1983, p. 1750. An emulsifier having an HLB value of 8 or lower is usually classified as being a water-in-oil promoting emulsifier and as fat soluble. Said preferred liquid water-in-oil emulsion provided at step 'b' may be a coarse emulsion, but more preferably has a D3.3 of at most 100 µm, even more preferably of at most 75 µm, still even more preferably of at most 50 µm and still even more preferably of at most 25 µm.

The temperature of the liquid mixture of water and oil provided at step 'b' should be below the melting point of the hardstock fat. Hereby is meant that the liquid mixture of water and oil should have a temperature below the melting point of the hardstock fat upon (i.e. just before) contact with the liquid hardstock at step 'c'. After contact the temperature of the mixture of water, oil and hardstock fat as a whole should not increase above the melting point of the hardstock fat. Optionally cooling can be applied to control the temperature of the mixture (of hardstock fat, water and liquid oil) at step 'c'.

As mentioned, conditions which favor fast crystallization of the hardstock fat upon mixing with the liquid mixture of water and oil at step 'c' improve the quality of the non-pourable emulsions made. Faster crystallization rates of the hardstock fat at step 'c' can be achieved by providing the liquid mixture of water and oil at step 'b' with a temperature further below the melting point of the hardstock fat. However, preferably for easy of processing, the temperature of the liquid mixture of water and oil at step 'b' is above the freezing point of water. Preferably the temperature of the liquid mixture of water and oil provided at step 'b' is from 1 to 20 degrees Celsius, more preferably from 2 to 15 degrees Celsius, even more preferably from 3 to 10 degrees Celsius, and still even more preferably from 4 to 8 degrees Celsius.

Preferably at least 75 wt. %, more preferably at least 85 wt. %, even more preferably at least 95 wt. % and still even more preferably at least 99 wt. % of the liquid oil and water, based on the total (combined) amount of liquid oil and water, is provided at step 'b'.

### Step 'c' - mixing the hardstock fat in liquid form with the liquid mixture of water and oil

At step 'c' of the process according to the invention, liquid hardstock fat is brought into contact with the liquid mixture of water and oil. As mentioned conditions which favor fast crystallization of the hardstock fat at step 'c' improve the quality of the emulsion products made. Fast crystallization rates can be further improved by mixing conditions which favor efficient heat exchange between the hardstock fat and the liquid mixture of water and oil. This can be achieved by fine (and fast) mixing (e.g. dispersion/homogenization) of the hardstock fat with the liquid mixture of water and oil to provide a large hardstock fat surface area for temperature exchange.

Preferably upon contact at step 'c' the liquid hardstock fat is essentially instantaneously mixed (e.g. to homogenization) with the liquid mixture of water and oil. Essentially instantaneous mixing of the hardstock fat with the liquid mixture of water and oil can be for example achieved by use of a mixing device having more than one inlet leading into the mixing chamber. In such a device one inlet can allow entry of the hardstock fat in liquid form and a second the entry of the liquid mixture of water and oil. Such a device can for example enable the liquid hardstock fat and the liquid mixture of water and oil to contact within an (actively running) mixing chamber and be essentially instantaneously mixed (to homogenization).

Many mixing devices known in the art of emulsion (e.g. margarine) making are suitable for use in the process according to the invention, and e.g. also allow streams of material to enter the mixing device via separate inlets. Preferably the one or more mixing devices used in the process according to the invention are in-line mixing devices suitable for continuous production of water-in-oil emulsions; and more preferably are high-shear mixing devices as understood by the person skilled in the of margarine making. Typically the process of mixing can lead to an increase in temperature of the mixture. During mixing at step 'c' the temperature of the mixing materials should not rise above the melting point of the hardstock fat. Optionally cooling can be applied to control the temperature of the mixture during mixing.

Examples of suitable mixing devices are pin stirrers (sometimes called C-units) and fluid dynamic mixers (sometimes called FDM mixers). Preferably the mixing device used in the process according to the invention is a FDM mixer and more preferably an FDM mixer as are described in WO02/038263.

It was found that high-fat non-pourable emulsions of further improved quality (e.g. hardness, stability and organoleptic quality of baked goods) can be achieved by use of a FDM mixer which preferably operates at one, more preferably more, of the following operating conditions/configurations:
- Preferably the FDM mixer operates above 500 rpm, more preferably from 750 to 4000 rpm, even more preferably from 1000 to 3500 rpm and still even more preferably from 1500 to 2500 rpm.
- Preferably the FDM mixer operates at a rotor tip speed of from 5 to 25 meters per second, more preferably from 7 to 20 meters per second and even more preferably from 10 to 15 meters per second.
- Preferably the FDM mixer operates (and is suitably configured) such that a mixing number (i.e. number of cavity-cavity interactions during residence time) is achieved from 5000 to 20000, more preferably from 7500 to 17500 and even more preferably from 10000 to 15000.

Conventional (prior art) wrappers and/or tub margarines are generally made using the votator process. Therein the hardstock fat, water and oil are typically treated by one or more A-units (i.e. surface scrapped heat exchangers), C-units (i.e. pin stirrers) and B-units before packing (e.g. in a wrapper). The B-unit, which is also known as a resting tube, typically has a relatively large volume and sieves plates as certain positions in the tube. The B-unit allows the emulsion to further harden before packaging.

Surprisingly it was found that in the process according to the invention, further treatment (i.e. after (high-shear) mixing) by one or more additional C-units and/or B-units to achieve sufficient product quality (e.g. hardness before packing) can be omitted. For example, (high-shear) mixing by a FDM was found to be sufficient to provide good quality products and allow packing in a tub or wrapper. To improve ease of packing, in particular for wrapper margarines, preferably the exit-temperature of the product leaving the (high shear) mixing device is at most 15 degrees Celsius, more preferably at most 12 degrees Celsius, even more preferably at most 10 degrees Celsius and still even more preferably at most 8 degrees Celsius.

The option to omit further treatment by C-, and/or B-units to provide good quality products results in faster processing times, a reduced energy requirement, lower line pressure and reduced factory space requirement and generally leads to a more simple process. Preferably the process according to the invention does not comprise B-unit or C-unit treatment and more preferably does not comprise C-unit and B-unit treatment.

### Hardstock fat

The non-pourable water-in-oil emulsion according to the invention comprises from 5 to 90 wt. % of hardstock fat, based on total fat. The hardstock fat may be a single fat or a mixture of different fats. The hardstock fat is of vegetable origin. The hardstock fat may comprise conventional oils and fats which are of both animal and vegetable origin.

Examples of sources of conventional oils and fats include coconut oil, palm kernel oil, palm oil, soybean oil, safflower oil, cotton seed oil, rapeseed oil, poppy seed oil, corn oil, sunflower oil, olive oil, algae oil and blends thereof. For the purpose of this invention, algae oils are considered vegetable oils. The hardstock fat comprises or essentially consists of fat derived from palm fat, allanblackia, pentadesma, shea butter, coconut oil, soybean oil, rapeseed oil or any combination thereof.

The hardstock fat may be modified fat, such as fat which is produced by fractionation, hydrogenation and/or interesterification. In particular fractionation and hydrogenation can be used to alter the melting profile and N-line profile of a fat. Preferably the hardstock fat according to the invention does not contain partially hydrogenated fats and more preferably contains no partially- or fully hydrogenated fats. Preferably the emulsion according to the invention comprises only natural hardstock fats.

An important consideration in selecting hardstock fat and liquid oil is that the level of *trans* FA of the fat blend as a whole should not exceed 5 wt. %. Thus the hardstock fat may have *trans* FA content which exceeds 5 %, based on the weight of the hardstock fat, when mixed with suitable amounts of oil/fat which have little or no *trans* FA.

An important consideration in selecting hardstock fat and liquid oil is that the level of *trans* FA of the fat blend as a whole should not exceed 5 wt. %. Thus the hardstock fat may have *trans* FA content which exceeds 5 %, based on the weight of the hardstock fat, when mixed with suitable amounts of oil/fat which have little or no *trans* FA. As such the fat blend as a whole would still adhere to the *trans* FA content of less than 5 wt. % as specified by the invention.

It is observed that a further reduction of the *trans* FA content of the hardstock fat leads to emulsions according to the invention of further improved quality. Therefore, preferably the hardstock fat according to the invention comprises at most 10 wt. %, more preferably at most 7 wt. %, even more preferably at most 5 wt. %, still even more preferably at most 3 wt. % and still even more preferably at most 2.5 wt. % of *trans* FA's based on the total weight of the hardstock fat.

Preferably the emulsion according to the invention comprises from 10 to 70 wt. %, more preferably from 15 to 60 wt. %, even more preferably from 20 to 50 wt. % and still even more preferably 25 to 40 wt. % of hardstock fat, based on the weight of total fat.

Preferably the hardstock fat according to the invention has a solid fat content N10 from 45 to 100 (i.e. a 45 to 100 wt. % of solid fat at 10 degrees Celsius), N20 from 20 to 95 and N35 from 2 to 60; and more preferably has a solid fat content N10 from 50 to 85, N20 from 25 to 70 and N35 from 5 to 40.

Preferably the fat blend according to the invention has an N-line: N10 of 15 to 100; N20 of 5 to 70, N30 of 0 to 50; preferably has an N-line: N10 of 15 to 75; N20 of 10 to 50; N30 of 2 to 30; more preferably an N-line: N10 of 20 to 40; N20 of 15 to 30; N30 of 5 to 10.

It was found that use of such N-lines for the hardstock fat and the fat-blend respectively lead to emulsions according to the invention having further improved quality.

### Liquid oil

The liquid oil fraction preferably comprises unmodified vegetable oil such as soybean oil, sunflower oil, linseed oil, low erucic rapeseed oil (Canola), corn oil (maize oil), olive oil, algae oil and blends of vegetable oils. For the purpose of this invention algae oil is considered vegetable oil.

Preferably the liquid oil according to the invention comprises less than 2 wt. %, more preferably less than 1.5 wt. %, even more preferably less than 1.0 wt. % and still even more preferably less than 0.5 wt. % of *trans* FA's based on the total weight of the liquid oil.

Preferably the emulsion according to the invention comprises from 10 to 95 wt. %, preferably from 30 to 90 wt. %, more preferably from 40 to 80 wt. % and even more preferably from 50 to 75 wt. % of liquid oil, based on the weight of total fat.
Both the hardstock fat as well as the liquid oil consists essentially of vegetable fat and oil.

### Water-phase

The water (i.e. water-phase) is prepared according to the standard way in accordance with the chosen ingredients as understood by the person skilled in the art. The water-phase of the emulsion may suitably contain a variety of food grade ingredients, such as salts, vitamins and minerals, preservatives, flavors, and emulsifiers. The water-phase may also comprise gelling and/or thickening agents like for example starches, vegetable gums, pectin and gelling proteins suitable for such use like gelatin.

Preferably the emulsion according to the invention comprises from 1 to 50 wt. %, more preferably from 5 to 40 wt. %, even more preferably from 10 to 30 wt. % and still even more preferably from 15 to 25 wt. % of water-phase.

### Non-pourable edible water-in-oil emulsion

In a second aspect the invention relates to a non-pourable edible water-in-oil emulsion obtainable by the process according to the invention. The emulsion according to the invention is characterized by having novel properties such as an improved firmness, stability and organoleptic properties of bakery products made with the emulsion. In particular it was observed that cakes made with the emulsions according to the invention were softer compared to cakes made with votator-made wrapper products.

This was the case even though both emulsions (e.g. wrappers) had the same composition (e.g. same fat blend, water-phase). The structural basis, which underlies these new properties of the emulsions according to the invention are not known.

The emulsions according to the invention are further characterized by an improved stability as shown by a small and stable droplets size (as expressed in D3.3). This is apparent, in particular when compared to e.g. wrappers which are made according to the same general process steps, but having a *trans* FA level which exceeds 5 wt. %, based on total fat.

The non-pourable emulsions according to the invention have good firmness and shape retaining properties at refrigeration conditions (e.g. 4 degrees Celsius). However, as mentioned, in particular for convenience during use (e.g. in baking when making dough), but also for improved organoleptic qualities; it is desirable that non-pourable (e.g. solid or semi-solid) emulsion substantially soften at temperatures of 25-35 degrees Celsius. Surprisingly, the emulsion products according to the invention have greater hardness/firmness at 5 degrees Celsius, but greater softness at 25 degrees Celsius; when compared to products (e.g. wrappers) having a *trans* FA level exceeding 5 wt. % based on total fat. This effect is observed even when the hardness/firmness levels as measured in Stevens value are adjusted by the amounts of solids. Thus at refrigeration temperature surprisingly emulsions according to the invention show a greater firmness value per amount of solids, compared to emulsions not according not the invention. In contrast, at temperatures of 25 degrees Celsius surprisingly emulsions according to the invention show a lower firmness value per amount of solids, compared to emulsions not according to the invention. Therefore the emulsions according to the invention also show a greater softening between refrigeration temperatures (e.g. 4 degrees Celsius) to ambient temperatures or to 25 degrees Celsius. Further reducing the total amount of *trans* FAs further improves the properties of the emulsions according to the invention. Preferably the amount of *trans* unsaturated fatty acid is less than 3 wt. %, more preferably less than 2 wt. %, even more preferably less than 1.5 wt. % and still even more preferably less than 1.0 wt. %, based on the weight of total fat.

Preferably the non-pourable emulsion according to the invention has a Stevens value (as measured at 5 degrees Celsius) divided ('/') by the solids content (as measured at 5 degrees Celsius; i.e. 'N5') of at least 50, preferably at least 55, more preferably at least 60, even more preferably at least 65 and still even more preferably at least 70.

Preferably the emulsion according to the invention a Stevens value at 25 degrees Celsius of at most 125 and more preferably at most 100.

Preferably the emulsion according to the invention comprises from 60 to 95 wt. %, preferably from 70 to 90 wt. % and more preferably from 75 to 85 wt. % of total fat.

### Use of the non-pourable edible water-in-oil emulsion

As mentioned the emulsions according to the invention can be used in the preparation of baking to provide bakery products with improved organoleptic properties. This is in particular apparent when compared to e.g. wrapper products (having the same overall composition) but made according to a conventional votator process. Thus in a third aspect the invention relates to the use of non-pourable emulsions according to the invention in baking to improve the organoleptic properties of bakery products, more preferably to improve the softness of the bakery products and even more preferably to improve the softness of cakes.

Preferred aspects of the invention disclosed herein in the context of one or two aspect(s) of the invention (e.g. the first (process), second (product) or third aspect (use)) are also applicable to the other aspect(s) as well, *mutatis mutandis.*

For example the preferred levels of *trans* unsaturated fatty acid of the fat blend specified for the finished product apply also to the fat blend used in the process according to the invention make the product, as well as to the fat blend of the products when used according to the invention.

The invention is now illustrated by the following non limiting examples.

### Examples

### Softness measurements of cakes

The softness of cakes was measured by texture profile analysis. Texture profile analysis was carried out by a compression test on 3 cm thick cake slices using a TA.XT_Plus texture analyzer (Stable Micro Systems, UK) equipped with a 25 mm diameter cylindrical plastic probe. Samples were compressed maximally after 2 sec and 11 sec with a penetration speed 5 mm/s of and a penetration depth of 10 mm. Softness (or hardness) was determined as the peak force of the first compression of the cake slice.

### Solid Fat Content (SFC) measurements of fat

The solid fat content (SFC) in this description and claims is expressed as N-value, as defined in Fette, Seifen Anstrichmittel 80 180-186 (1978). The stabilization profile applied is heating to a temperature of 80 degrees Celsius, keeping the oil for at least 10 minutes at 60 degrees Celsius or higher, keeping the oil for 1 hour at 0 degrees Celsius and then 30 minutes at the measuring temperature.

### Stevens value

Stevens values indicates a products hardness or firmness. The Stevens value was measured with a Stevens penetrometer (Brookfield LFRA Texture Analyser (LFRA 1500), ex Brookfield Engineering Labs, UK) equipped with a stainless steel probe with a diameter of 4.4 mm and operated in "normal" mode. The probe is pushed into the product at a speed of 2 mm/s, a trigger force of 5 gram from a distance of 10 mm. The force required is read from the digital display and is expressed in grams. The temperature at which the Stevens value is determined at 5 degrees Celsius unless otherwise indicated.

In case of very soft products a 6.35 mm diameter probe was used to measure the Stevens hardness. The Stevens value measured with the 4.4 mm probe and the 6.35 mm probe could be compared by multiplying the 6.35 mm probe values by a factor of 2.

### Water droplet size distribution of spreads (D3.3 measurement)

The normal terminology for Nuclear Magnetic Resonance (NMR) is used throughout this method. On the basis of this method the parameters D3.3 and exp(σ) of a lognormal water droplet size distribution can be determined. The D3.3 is the volume weighted mean droplet diameter and σ (i.e. e^sigma) is the standard deviation of the logarithm of the droplet diameter.

The NMR signal (echo height) of the protons of the water in a water-in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure, which uses the log-normal droplet size distribution, the parameters of the water droplet size distribution D3.3 (volume weighed geometric mean diameter) and σ (distribution width) are calculated.

A Bruker magnet with a field of 0.47 Tesla (20 MHz proton frequency) with an air gap of 25 mm is used (NMR Spectrometer Bruker Minispec MQ20 Grad, ex Bruker Optik GmbH, DE).

### Production of high-fat non-pourable water-in-oil emulsions

In order to examine the impact of *trans* FA's content of the fat blend on the quality of non-pourable emulsions, we have made and compared two types of wrapper products. Wrappers of Composition A comprised a low *trans* hardstock (inES48), wrappers of Composition B comprised a high *trans* hardstock (PO45). Although the inES48 and PO45 hardstocks different in amount of *trans* FAs, we have aimed to keep them as much the same in other aspects. For example, these hardstocks have an almost identical N-line profile, which is generally considered an important characteristic of wrapper hardstock fats.

The Experiments 1 to 4 relate to wrappers with Composition A, which are wrappers according to the invention. The Comparatives 1-3 relate to wrappers with Composition B, which are wrappers not according to the invention Table 1.

**Table 1. Composition of wrapper products with composition A and B. Numbers represent parts by weight.**

| | Composition A | Composition B |
|---|---|---|
| Sunflower oil | 45.5 | 45.5 |
| Canola oil | 12.4 | 12.4 |
| ¹ inES48 | 25 | - |
| ² PO45 | - | 25 |
| ³ Dimodan HP | 0.2 | 0.2 |
| ⁴ Bolec ZT | 0.4 | 0.4 |
| Beta carotene (1%) | Trace | trace |
| Water | 16.5 | 16.5 |
| | | |
| *Trans* FA (on total fat) | 0.5 | 7.0 |

| | | |
|---|---|---|
| ¹ inES48 (hardstock): interesterified mixture of 65% dry fractionated palm oil stearin with an Iodine Value of 14 and 35% palm kernel oil. inES48 comprises 1.7 wt. % of *trans* FAs based on the hardstock. ² PO45 (hardstock): palm oil partially hydrogenated up to a slip melting point of 45 degrees Celsius. PO45 comprises 23 wt. % of *trans* FAs based on the hardstock. ³ Dimodan HP: molecularly distilled mono-/diglyceride mixture derived from fully hardened palm oil (90% monoglyceride) (Supplier: Danisco, Denmark). ⁴ Bolec ZT (Supplier: Unimills B.V., the Netherlands) is a lecithin-based emulsifier | | |

### Production of Examples 1 to 4 and Comparatives 1 to 3

Hardstock fat in liquid form was prepared by melting and stirring the hardstock fat at 40 degrees Celsius (in a 200 liter thermostated stainless steel vessel, equipped with a rotor with stirrer blades operating at about 20 rotations per minute). To the liquid hardstock fat (either inES48 or PO45) dimodan HP and part of the Bolec ZT were added. (These emulsifiers were first pre-dissolved by heating to 80 degrees Celsius in a small amount of oil.)

In a separate vessel a water-in-oil emulsion (W/O emulsion) was made by mixing, the water, sunflower oil, the remainder of the Bolec ZT and the Beta carotene (in a separate 200 liter thermostated stainless steel vessel, equipped with a rotor with stirrer blades operating at about 40 rotations per minute). (The Bolec ZT was first pre-dissolved by heating to 80 degrees Celsius in a small amount of oil.) The liquid W/O emulsion was cooled to 6 degrees Celsius.

The streams of liquid hardstock fat (40 degrees Celsius) and liquid W/O emulsion (6 degrees Celsius) were combined and mixed using a fluid dynamic mixer (FDM mixer) according to WO02/38263 having the following specifications: the FDM comprised of a concentric rotor-stator system with 4 rows of indentations or cavities machined into the rotor and stator surfaces with a total volume of 0.083 liter. The cavities in the rotor and stator are generally spherical segments which are open on both vertical and horizontal faces. The rotor and stator are based on a stepped conical form so that the diameter of the cone increases from inlet to outlet (about 50 up to 150 mm). The mixer is commercially available from Maelstrom (http://www.maelstrom-apt.com/product-dc50/). The FDM was equipped with two separates inlets for feeding the hardstock fat in liquid form and the liquid W/O emulsion. Thereby the liquid hardstock fat en the liquid W/O emulsion were instantaneously mixed upon contact, as they met in the running FDM mixing chamber. The FDM was operated according to the conditions as described in Table 2. In particular the effect of throughputs rates and rotation speeds of the FDM were also evaluated on wrapper product quality.

The finished mixed product (comprising hardstock, oil and water) was packaged in a wrapper to provide a wrapper product.

### Results

After the wrappers were made according to the processing conditions as described, the wrappers were stored at 5 degrees Celsius for one week. After said week the Stevens value, spreadibility, average droplet size and solids content were measured (Table 3). Next wrappers were stored for an additional two days at 25 degrees Celsius after which the wrappers were measured again (Table 4).

**Table 2. processing conditions of Examples 1 to 4 and Comparatives 1 to 3.**

| Sample | Composition | Throughput kg/h | Rotation speed (rpm) |
|---|---|---|---|
| Ex. 1 | A | 200 | 1800 |
| Ex. 2 | A | 200 | 2300 |
| Ex. 3 | A | 200 | 2800 |
| Ex. 4 | A | 300 | 2800 |
| Comp. 1 | B | 200 | 1800 |
| Comp. 2 | B | 200 | 2300 |
| Comp. 3 | B | 200 | 2800 |

**Table 3. Analysis of Examples 1 to 4 and Comparatives 1 to 3, stored 1 week at 5 degrees Celsius.**

| Sample | Stevens | Solids | S/N | D3.3 | e^sigma |
|---|---|---|---|---|---|
| Ex. 1 | 805 | 21.8 | 73.8 | 5.75 | 1.87 |
| Ex. 2 | 868 | 22.1 | 78.6 | 4.20 | 1.83 |
| Ex. 3 | 688 | 22.3 | 61.8 | 3.06 | 1.77 |
| Ex. 4 | 634 | 21.1 | 60.0 | 2.88 | 1.67 |
| Comp. 1 | 528 | 21.6 | 48.8 | 6.52 | 1.88 |
| Comp. 2 | 547 | 20.9 | 52.3 | 4.89 | 1.65 |
| Comp. 3 | 548 | 20.6 | 53.3 | 4.39 | 1.84 |

The results of Table 3 show that when stored at 5 degrees Celsius the wrappers made according to the invention (Examples 1 to 4) have smaller droplet size and a higher Stevens value (also when adjusted for solids content; i.e. higher S/N value). This when compared to wrappers not according to the invention (Comparatives 1 to 3). For all wrappers, the size distribution (e^sigma) was acceptable (e.g. below 2.0). Table 3 further shows that the best results were obtained at FDM operating in the range of 1500 to 2500 rpm. Finally, it was observed that use of higher throughput conditions (e.g. 300 kg/hour) lead to wrapper products which had a very smooth appearance (more so than at any of the other processing conditions).

**Table 4. Analysis Examples 1 to 4 and Comparatives 1 to 3, stored 1 week at 5 degrees Celsius, followed by 2 days at 25 degrees Celsius.**

| Sample | Stevens | Solids | S/N |
|---|---|---|---|
| Ex. 1 | 109 | 11.8 | 9.3 |
| Ex. 2 | 122 | 12.0 | 10.2 |
| Ex. 3 | 41 | 11.9 | 3.5 |
| Ex. 4 | 40 | 11.7 | 3.4 |
| Comp.1 | 121 | 12.6 | 9.6 |
| Comp. 2 | 150 | 13.1 | 11.5 |
| Comp. 3 | 157 | 12.6 | 12.5 |

**Table 5. Analysis Examples 1 to 4 and Comparatives 1 to 3, stored 1 week at 5 degrees Celsius, followed by 2 days at 25 degrees Celsius.**

| Sample | ¹softening |
|---|---|
| Ex. 1 | 7.9 |
| Ex. 2 | 7.7 |
| Ex. 3 | 17.7 |
| Ex. 4 | 17.6 |
| Comp.1 | 5.1 |
| Comp. 2 | 4.5 |
| Comp. 3 | 4.3 |

| | |
|---|---|
| ¹softening = S/N value of table 3 divided by S/N value of Table 4. | |

The wrappers were measured again (Table 4) after storing an additional two days at 25 degrees Celsius. Wrapper products according to the invention (Examples 1 to 4) were substantially softer than wrapper products not according to the invention (Comparatives 1 to 3). This is very surprising since the wrapper products according to the invention were initially harder (higher Stevens value and S/N) at 5 degrees Celsius than the wrappers not according to the invention (see Table 3). To highlight this 'softening', in Table 5 under the S/N value, measured after storage for 1 week at 5 degrees Celsius (Table 3) is divided by the S/N value as measured after two additional days at 25 degrees Celsius (Table 4). Clearly, this 'softening factor' is a factor 2 to 3 times higher for wrappers according to the invention (Examples 1 to 4) versus for wrappers not according to the invention (Comparatives 1 to 3). To conclude wrappers according to the invention show improved and excellent softening at working temperatures, which is beneficial for use in baking.

### Bakery performance

Wrapper products were made according to the composition set out in Table 6:

**Table 6. Composition of wrapper products used for Example 5 and Comparative 4. Numbers represent parts by weight.**

| **Ingredients** | **amount** |
|---|---|
| Rapeseed oil | 42.2 |
| ¹ inES48 | 17.4 |
| ³ Dimodan HP | 0.1 |
| ⁴ Bolec ZT | 0.2 |
| Sodium chloride | 0.3 |
| Potassium sorbate | 0.05 |
| Butter milk powder | 0.5 |
| Beta carotene (1%) | Trace |
| Flavours | Trace |
| Water | 39.0 |

| | |
|---|---|
| ¹ inES48 (hardstock): interesterified mixture of 65% dry fractionated palm oil stearin with an Iodine Value of 14 and 35% palm kernel oil. ³ Dimodan HP: molecularly distilled mono-/diglyceride mixture derived from fully hardened palm oil (90% monoglyceride) (Supplier: Danisco, Denmark). ⁴ Bolec ZT (Supplier: Unimills B.V., the Netherlands) is a lecithin-based emulsifier | |

### Production of Example 5

Example 5 (according to the invention) was made according to the following conditions:
The liquid hardstock was prepared as described for Example 1, except that all of the emulsifier was dissolved in the liquid hardstock. The water phase was prepared by mixing the ingredients into the water at pasteurization temperature, followed by pH adjustment at about 60 degrees Celsius and subsequently by an inline cooling in a tubular heat exchanger to obtain about 5 degrees Celsius at the inline junction point with the cold oil phase in case of the spreads production process. The oil phase was prepared by adding the flavors and beta-carotene and cool down the oil phase in the tank to about 5 degrees Celsius.

The streams of liquid oil, water and liquid hardstock were combined at a flow rate of 63.8 kg/h, 60 kg/h and 26.4 kg/h respectively in the FDM as described above. The temperatures of the liquid oil, water and liquid hardstock were 10.7, 4.6 and 43 degrees Celsius respectively. The FDM was operated at 2000 rpm. After mixing with the FDM the mixtures were packaged and stored at 5 degrees Celsius.

After 1 week at 5 degrees Celsius the products of Example 5 had a hardness of about 370 gram at 5 degrees Celsius and a solids content of 15.1%, resulting in an S/N ratio of about 49. After said week of storage the average droplet size was 5.7 (as measured in D3.3) with an e-sigma of 2.15.

### Production of Comparative 4

Comparative 4 (not according to the invention) was made according to the general votator process having the following conditions. The fat blend was prepared by blending the oil and the hardstock fat at about 70 degrees Celsius in a 200 liter stainless steel feed tank equipped with a rotor with stirrer blades operating at about 40 rotations per minute. The emulsifier and Lecithin were added (pre-heated in a magnetron to about 80 degrees Celsius). Next the flavors and beta-carotene solution were added followed by water phase. This water and oil premix was kept at a holding temperature of about 65°C.

The premix was processed (throughput about 100 kg/h) in an ACAAB sequence of A-, C, and B-units to provide the final emulsion. The A-units (sometimes called scraped surface heat exchangers) had an internal volume of about 0.1 liter and were operated at 1000 rpm. The C-unit which was used had an internal volume of about 3 liter. The B-unit used was configured as a hollow tube of about 1.5 meter length with an internal diameter of 8 cm.

After 1 week at 5 degrees Celsius the products of Comparative 4 had a hardness of about 190 gram at 5 degrees Celsius and a solids content of 16.8%, resulting in an S/N ratio of about 23. After said week of storage the average droplet size was 2.3 (as measured in D3.3) with an e-sigma of 3.3.

The wrappers according to Example 5 and Comparative 4 were subsequently used to bake cakes: All cakes were prepared with 150 g wrapper product, 150 g eggs, 150 g flour, 150 g sugar, 6 g baking powder. Cake preparation consisted of the following steps:
1. Cream margarine with sugar for 3 min with a hand mixer
2. While mixing for 1 min add egg slowly to cream
3. Add flour and mix for 0.5 min
4. Bake for 70 min at 150 °C
The cake baking was done in triplicate (cakes A, B and C)

### Results

The softness of the cakes made with the wrapper Example 5 and Comparative 4 was measured (Table 7).

**Table 7. Softness measurements of cakes**

| **Softness** | **Cake A** | **Cake B** | **Cake C** | **Average** |
|---|---|---|---|---|
| Example 5 | 750 | 729 | 711 | 730 |
| Comparative 4 | 912 | 920 | 940 | 923 |

As can be clearly see from Table 7, cakes made with emulsions according to the (process of the) invention (Example 5) results in much softer cakes than if made with emulsions not according to the invention (Comparative 4).

## Claims

1. Process for the manufacture of a non-pourable edible water-in-oil emulsion comprising at least 50 wt. % of total fat, comprising the following steps:
a. providing 5 to 90 wt. % of hardstock fat, based on the weight of total fat, in liquid form;
b. providing a liquid mixture of water and oil, wherein the mixture has a temperature below the melting point of the hardstock fat;
c. mixing the hardstock fat in liquid form with the liquid mixture of water and oil;
wherein the temperature of the mixture provided at step 'c' is below the melting point of the hardstock fat, and wherein the amount of trans unsaturated fatty acid is less than 5 wt. %, based on the weight of total fat, wherein both the hardstock fat as well as the liquid oil consists essentially of vegetable fat and oil.

2. Process according to claim 1, wherein the temperature of the hardstock fat in liquid form provided at step 'a' is at least 25 degrees Celsius, preferably from 27 to 80 degrees Celsius, more preferably from 30 to 70 degrees Celsius, even more preferably from 35 to 60 degrees Celsius and still even more preferably from 38 to 50 degrees Celsius

3. Process according to claim 1 or claim 2, wherein the temperature of the liquid mixture of water and oil provided at step 'b' is from 1 to 20 degrees Celsius, preferably from 2 to 15 degrees Celsius, more preferably from 3 to 10 degrees Celsius, and even more preferably from 4 to 8 degrees Celsius.

4. Process according to any one of claims 1 to 3, wherein step 'c' is performed in a fluid dynamic mixer operating above 500 rpm, preferably from 750 to 4000 rpm, more preferably from 1000 to 3500 rpm and even more preferably from 1500 to 2500 rpm.

5. Process according to any one of claim 1 to 4, wherein the amount of *trans* unsaturated fatty acid of the hardstock fat is at most 10 wt. %, preferably at most 7 wt. %, more preferably at most 5 wt. %, even more preferably at most 3 wt. %, and still even more preferably at most 2.5 wt. %, based on the weight of hardstock fat.

6. Process according to any one of claims 1 to 5, wherein the emulsion comprises from 10 to 70 wt. %, preferably from 15 to 60 wt. %, more preferably from 20 to 50 wt. % and even more preferably 25 to 40 wt. % of hardstock fat, based on the weight of total fat.

7. Process according to any one of claims 1 to 6, wherein the fat blend on total fat has an N-line: N10 of 15 to 100; N20 of 5 to 70, N30 of 0 to 50; preferably has an N-line: N10 of 15 to 75; N20 of 10 to 50; N30 of 2 to 30; more preferably an N-line: N10 of 20 to 40; N20 of 15 to 30; N30 of 5 to 10.

8. Process according to any one of claims 1 to 7 wherein the emulsion comprises from 10 to 95 wt. %, preferably from 30 to 90 wt. %, more preferably from 40 to 80 wt. % and even more preferably from 50 to 75 wt. % of liquid oil, based on the weight of total fat.

9. Process according to any one of claims 1 to 8 wherein the emulsion comprises from 1 to 50 wt. %, preferably from 5 to 40 wt. %, more preferably from 10 to 30 wt. % and even more preferably from 15 to 25 wt. % of water-phase.

## Patentansprüche

1. Verfahren zur Herstellung einer nicht gießbaren essbaren Wasser-in-Öl-Emulsion, die mindestens 50 Gew.-% des Gesamtfetts umfasst, umfassend die folgenden Schritte:
a. Bereitstellen von 5 bis 90 Gew.-% Hardstockfett, bezogen auf das Gesamtfettgewicht, in flüssiger Form;
b. Bereitstellen einer flüssigen Mischung aus Wasser und Öl, wobei die Mischung eine Temperatur unter dem Schmelzpunkt des Hardstockfetts aufweist;
c. Mischen des Hardstockfetts in flüssiger Form mit der flüssigen Mischung aus Wasser und Öl;
wobei die Temperatur der in Schritt "c" bereitgestellten Mischung unter dem Schmelzpunkt des Hardstockfetts liegt und wobei die Menge an trans-ungesättigter Fettsäure weniger als 5 Gew.-% bezogen auf das Gesamtfettgewicht beträgt, wobei sowohl das Hardstockfett als auch das flüssige Öl im Wesentlichen aus pflanzlichem Fett und Öl bestehen.

2. Verfahren nach Anspruch 1, wobei die Temperatur des in Schritt "a" bereitgestellten flüssigen Hardstockfetts in flüssiger Form mindestens 25 Grad Celsius, vorzugsweise 27 bis 80 Grad Celsius, bevorzugter 30 bis 70 Grad Celsius, noch bevorzugter 35 bis 60 Grad Celsius und noch bevorzugter 38 bis 50 Grad Celsius beträgt.

3. Verfahren nach Anspruch 1 oder Anspruch 2, wobei die Temperatur der in Schritt "b" bereitgestellten flüssigen Mischung aus Wasser und Öl 1 bis 20 Grad Celsius, vorzugsweise 2 bis 15 Grad Celsius, bevorzugter 3 bis 10 Grad Celsius und noch bevorzugter von 4 bis 8 Grad Celsius beträgt.

4. Verfahren nach einem der Ansprüche 1 bis 3, wobei Schritt "c" in einem fluiddynamischen Mischer durchgeführt wird, der oberhalb von 500 UpM, vorzugsweise bei 750 bis 4000 UpM, bevorzugter bei 1000 bis 3500 UpM und noch bevorzugter bei 1500 bis 2500 UpM betrieben wird.

5. Verfahren nach einem der Ansprüche 1 bis 4, wobei die Menge an trans-ungesättigter Fettsäure des Hardstockfetts höchstens 10 Gew.-% beträgt, vorzugsweise höchstens 7 Gew.-%, bevorzugter höchstens 5 Gew.-%., noch bevorzugter höchstens 3 Gew.-% und noch bevorzugter höchstens 2,5 Gew.-% bezogen auf das Gewicht des Hardstockfetts beträgt.

6. Verfahren nach einem der Ansprüche 1 bis 5, wobei die Emulsion von 10 bis 70 Gew.-%, vorzugsweise von 15 bis 60 Gew.-%, bevorzugter von 20 bis 50 Gew.-%, und noch bevorzugter von 25 bis 40 Gew.-% Hardstockfett bezogen auf das Gesamtfettgewicht umfasst.

7. Verfahren nach einem der Ansprüche 1 bis 6, wobei der Fettanteil des Gesamtfetts eine N-Linie wie folgt aufweist: N10 von 15 bis 100; N20 von 5 bis 70, N30 von 0 bis 50; und vorzugsweise eine N-Linie wie folgt aufweist: N10 von 15 bis 75; N20 von 10 bis 50; N30 von 2 bis 30; bevorzugter eine N-Linie wie folgt aufweist: N10 von 20 bis 40; N20 von 15 bis 30; N30 von 5 bis 10.

8. Verfahren nach einem der Ansprüche 1 bis 7, wobei die Emulsion von 10 bis 95 Gew.-%, vorzugsweise von 30 bis 90 Gew.-%, bevorzugter von 40 bis 80 Gew .-%, und noch bevorzugter von 50 bis 75 Gew.-% flüssiges Öl bezogen auf das Gesamtfettgewicht umfasst.

9. Verfahren nach einem der Ansprüche 1 bis 8 wobei die Emulsion von 1 bis 50 Gew.-%, vorzugsweise von 5 bis 40 Gew.-%, bevorzugter von 10 bis 30 Gew.-%, und noch bevorzugter von 15 bis 25 Gew.-% Wasserphase umfasst.

## Revendications

1. Procédé de fabrication d'une émulsion eau dans huile comestible non fluide comprenant au moins 50% en poids de matières grasses totales, comprenant les étapes suivantes:
a. fournir 5% à 90% en poids de matières grasses solides, par rapport au poids de matières grasses totales, sous forme liquide;
b. fournir un mélange liquide d'eau et d'huile, dans lequel le mélange a une température inférieure au point de fusion des matières grasses solides;
c. mélanger les matières grasses solides sous forme liquide avec le mélange liquide d'eau et d'huile;
dans lequel la température du mélange fourni à l'étape (c) est en-dessous du point de fusion des matières grasses solides, et dans lequel la quantité d'acide gras trans insaturés est inférieure à 5% en poids, par rapport au poids des matières grasses totales, dans lequel les matières grasses solides et l'huile liquide consistent tous deux sensiblement en matières grasses et huile végétales.

2. Procédé selon la revendication 1, dans lequel la température des matières grasses solides sous forme liquide fournie à l'étape (a) est d'au moins 25 degrés Celsius, préférablement de 27 à 80 degrés Celsius, plus préférablement de 30 à 70 degrés Celsius, encore plus préférablement de 35 à 60 degrés Celsius et même encore plus préférablement de 38 à 50 degrés Celsius.

3. Procédé selon la revendication 1 ou la revendication 2, dans lequel la température du mélange liquide d'eau et d'huile fourni à l'étape (b) est comprise entre 1 et 20 degrés Celsius, préférablement entre 2 et 15 degrés Celsius, plus préférablement entre 3 et 10 degrés Celsius, et encore plus préférablement entre 4 et 8 degrés Celsius.

4. Procédé selon l'une quelconque des revendications 1 à 3, dans lequel l'étape (c) est réalisée dans un mélangeur dynamique à fluide fonctionnant à plus de 500 tr/min, préférablement de 750 à 4000 tr/min, plus préférablement de 1000 à 3500 tr/min et encore plus préférablement de 1500 à 2500 tr/min.

5. Procédé selon l'une quelconque des revendications 1 à 4, dans lequel la quantité d'acide gras trans insaturé des matières grasses solides est d'au plus 10% en poids, préférablement au plus 7% en poids, plus préférablement au plus 5% en poids, encore plus préférablement au plus 3% en poids, et même encore plus préférablement au plus 2,5% en poids, par rapport au poids des matières grasses solides.

6. Procédé selon l'une quelconque des revendications 1 à 5, dans lequel l'émulsion comprend de 10 à 70% en poids, de préférence de 15 à 60% en poids, plus préférablement de 20 à 50% en poids et encore plus préférentiellement de 25 à 40% en poids de matière grasse solide, par rapport au poids de graisse total.

7. Procédé selon l'une quelconque des revendications 1 à 6, dans lequel le mélange des matières grasses sur la matière grasse totale a une ligne N: N10 de 15 à 100; N20 de 5 à 70, N30 de 0 à 50; a préférablement une ligne N: N10 de 15 à 75; N20 de 10 à 50; N30 de 2 à 30; plus préférablement une ligne N: N10 de 20 à 40; N20 de 15 à 30; N30 de 5 à 10.

8. Procédé selon l'une quelconque des revendications 1 à 7, dans lequel l'émulsion comprend de 10 à 95% en poids, de préférence de 30 à 90% en poids, plus préférablement de 40 à 80% en poids et encore plus préférablement de 50 à 75% en poids d'huile liquide, par rapport poids de graisse total.

9. Procédé selon l'une quelconque des revendications 1 à 8, dans lequel l'émulsion comprend de 1 à 50% en poids, préférablement de 5 à 40% en poids, plus préférablement de 10 à 30% en poids, et encore plus préférentiellement de 15 à 25% en poids de phase aqueuse.
